(19) Europäisches Patentamt / European Patent Office / Office européen des brevets

(11) **EP 4 625 297 A1**

(12) **EUROPEAN PATENT APPLICATION**

(43) Date of publication:
**01.10.2025  Bulletin 2025/40**

(21) Application number: **24214370.9**

(22) Date of filing: **20.11.2024**

(51) International Patent Classification (IPC):
**G06Q 30/0201** *(2023.01)*    **G06Q 30/0204** *(2023.01)*
**G06Q 30/0282** *(2023.01)*

(52) Cooperative Patent Classification (CPC):
**G06Q 30/0201; G06Q 30/0204; G06Q 30/0282**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Kontek, Krzysztof**
**00-071 Warsaw Mazowieckie (PL)**

(72) Inventor: **Kontek, Krzysztof**
**00-071 Warsaw Mazowieckie (PL)**

(74) Representative: **AOMB Polska Sp. z.o.o.**
**ul. Rondo Ignacego Daszynskiego 1**
**00-843 Warsaw (PL)**

Remarks:
Amended claims in accordance with Rule 137(2) EPC.

(54) **A METHOD, COMPUTER PROGRAM, AND COMPUTER-READABLE MEDIUM FOR DETECTING CLIQUES OF EVALUATORS IN A DECISION-MAKING PROCESS**

(57)    The inventions relate to a method for detecting the cliques of evaluators in a decision-making process, comprising steps of: Collecting a data matrix $S_{ij}$ to a computer system using an automatic input interface. The elements of the matrix $S_{ij}$ are the real numbers in a predefined range. Rach of the elements of the matrix $S_{ij}$ represent a numerical evaluation provided by an evaluator $j$ for an evaluated entity $i$. For each pair of evaluators $j$, where $j_1$ and $j_2$ ($j_1 \neq j_2$) from the data matrix $S_{ij}$, calculating by the computer system the Pairwise Adjusted Distances $ED_{j1jj2}$. Applying by the computer system a nonlinear transformation to the Pairwise Adjusted Distances $_{j1jj2}$ Identifying cliques of evaluators by comparing by the computer system the transformed distances $ED^{*}_{j_1 j_2}$ to a robust lower threshold. The invention also described a computer program and computer-readable medium for executing the method described.

EP 4 625 297 A1

## Description

## Technical Field

This invention pertains to decision-making processes involving multiple evaluators, such as jurors, experts, reviewers, or users in environments like performance-based competitions, voting systems, and online review platforms. The method addresses the issue of bias introduced by excessive agreement between subsets of evaluators, referred to as "cliques." By identifying and excluding cliques, the invention improves the accuracy, fairness, and reliability of the final decisions.

## Prior Art

In many evaluative environments such as competitions, voting systems, and professional assessments, there exists the risk of bias introduced by small groups of evaluators who demonstrate unusually high levels of agreement. These groups, known as "cliques," can skew the final results by exerting disproportionate influence, leading to inaccurate or biased outcomes. This abnormal agreement might result from collusion, unconscious bias, or other shared influences.

In online review systems (such as Amazon, Booking.com, or IMDb), groups of users may manipulate ratings by coordinating their reviews to promote or demote certain products, services, or films. These manipulative actions create a distorted view of consumer preferences and mislead future customers.

Traditional outlier detection methods primarily focus on identifying individual scores that deviate from the consensus (e.g., mean, median). More advanced approaches, like Excluding Outlier Evaluators (EOE) method, focus on detecting individual evaluators whose entire set of scores deviates from the consensus. However, both approaches typically fail to address coordinated, group-level manipulation as they overlook cases where groups of evaluators display abnormal agreement, even though such cliques can have a subtle but significant effect on the fairness and accuracy of the evaluation process. Detecting these cliques requires focusing on patterns of agreement between evaluators rather than solely focusing on individual outlier scores or individual outlier evaluators.

## Summary of the Invention

This invention provides a method and a system to detect and exclude cliques of evaluators in competitions, online review platforms, and other assessments by jurors, experts, reviewers, or users. By identifying and excluding cliques of evaluators, this method ensures a more accurate and fair representation of user preferences.

According to the first aspect of the invention a method for detecting the cliques of evaluators in a decision-making process is provided, comprising steps:

    a. Collecting a data matrix $S_{ij}$ to a computer system using an automatic input interface. The elements of the matrix $S_{ij}$ are the real numbers in a predefined range, wherein each of the elements of the matrix $S_{ij}$ represent a numerical evaluation provided by an evaluator j for an evaluated entity $i$.

    b. For each pair of the evaluators $j$, where $j_1$ and $j_2$ $(j_1 \neq j_2)$ from the data matrix $S_{ij}$, calculating by the computer system the Pairwise Adjusted Distances $ED_{j_1 j_2}$.

    c. Applying by the computer system a nonlinear transformation to the Pairwise Adjusted Distances $ED_{j_1 j_2}$ so that:

$$ED^*_{j_1 j_2} = f\left(ED_{j_1 j_2}\right)$$

preferably by a natural logarithm function $f(x) = ln(x)$, or a power function $f(x) = x^\propto$ where $\propto > 1$.

    d. Identifying the cliques of the evaluators $j$ by comparing by the computer system the transformed distances $ED^*_{j_1 j_2}$ to a robust lower threshold, preferably as defined by formula:

$$ED^*_{j_1 j_2} < MED - R * MAD$$

    where:

        $R$ is a constant, preferably in range 1 to 10, more preferably in range 1.9 to 3.3,

*MED* is the median of the evaluator distances $ED^*_{j_1 j_2}$ ,

*MAD* is defined as:

$$MAD = \text{median}\left(\left|ED^*_{j_1 j_2} - MED\right|\right)$$

Preferably after step a) there is performed operation of Linear Data Transposition comprising following steps:

a1) Setting by the computer system a Target Central Measure $M_{trg}$, preferably a median or an average of the data matrix $S_{ij}$.

a2) Calculating by the computer system the transposed scores $\overline{S_{iJ}}$ by shifting the entities *i* for each of the evaluator *j* to match the target central measure $M_{trg}$ using the formula:

$$\overline{S_{iJ}} = S_{ij} + M_{trg} - M_j$$

where $M_j$ is a central measure for each evaluator *j*, which can be the mean, median, or any other robust central measure across all entities they evaluated.

a3) Calculating by the computer system a spread $R_j$ for each of the evaluators *j*, defined as:

$$R_j = S_{max_j} - S_{min_j}$$

a4) Determining by the computer system a target spread for scores $R_{trg}$, preferably an average or a median across all the evaluators *j*.

a5) Adjusting by the computer system the transposed scores $\overline{S_{iJ}}$ so that their spread matches the target spread $R_{trg}$, using the formula:

$$\overline{\overline{S_{iJ}}} = \left(\overline{S_{iJ}} - M_j\right) \cdot \frac{R_{trg}}{R_j} + M_j$$

wherein the data matrix $\overline{S_{iJ}}$ replaces the data matrix $S_{ij}$ for calculations of further steps.

Preferably after step a) there is performed operation of Nonlinear Data Transposition comprising following steps:

a1) Calculating by the computer system for each of the evaluator *j* the minimum $S_{min_j}$ and maximum $S_{max_j}$ values of their entities *i*.

a2) Setting by the computer system the Target Range $[S_{min_{trg}}, S_{max_{trg}}]$ preferably a median or an average of the minimum $S_{min_j}$ and maximum $S_{max_j}$.

a3) Normalizing by the computer system each of the evaluators *j* entity *i* to fit within the range [0, 1] using the formula:

$$\overline{S_{iJ}} = \frac{S_{ij} - S_{min_j}}{S_{max_j} - S_{min_j}}$$

a3) Calculating by the computer system the Average Normalized Values $AM_j$ for each of the evaluator *j* and the average normalized value *AM* across all the entities *i*,

a4) Adjusting by the computer system the entities *i* of each of the evaluator *j* using a nonlinear transformation function such that $f(x) = x^\alpha$, where $\alpha$ is a parameter controlling the transformation, wherein the equation for each evaluator *j* is:

$$\sum_i \overline{S_{iJ}}^{\alpha_j} = AM$$

a4) Renormalize by the computer system the entities *i*, using the formula:

$$\overline{\overline{S_{ij}}} = S_{min_{trg}} + \left(S_{max_{trg}} - S_{min_{trg}}\right)\overline{S_{ij}}^{\propto j}$$

wherein the data matrix $\overline{S_{ij}}$ replaces the data matrix $S_{ij}$ for calculations of further steps.

Preferably the Pairwise Adjusted Distances $ED_{j_1j_2}$ are calculated using a Pairwise Adjusted Minkowski Distance formula:

$$ED_{j_1j_2} = \left(\frac{1}{K^*}\sum_{i=1}^{K}|S_{ij_1} - S_{ij_2}|^p\right)^{\frac{1}{p}}$$

where:

- $S_{ij}$ is the score given by evaluator $j$ for entity $i$,
- K is the total number of the entities $i$, and
- $K^*$ is a number of the entities $i$ evaluated by the evaluator $j$,
- p $\geq$ 0 is a parameter suitable for flexible weighting of deviations, with larger deviations penalized more heavily as $p$ increases.

Preferably the Adjusted Distances are calculated using Adjusted Weighted Minkowski Distance formula:

$$WED_{j_1j_2} = \left(\frac{\sum_{i=1}^{K}\left(w_i(M_i)\cdot|S_{ij_1} - S_{ij_2}|\right)^p}{\sum_{i=1}^{K}w_i(M_i)^p}\right)^{\frac{1}{p}}$$

where:

- $S_{ij}$ is the score given by the evaluator $j$ for the entity $i$,
- K is the total number of the entities $i$,
- $p \geq 0$ is a parameter allowing flexible weighting of deviations, with the larger deviations penalized more heavily as $p$ increases,
- $w_i(M_i)$ is a weight function applied to the deviations based on the importance of the consensus score $M_i$ for each entity $i$, giving more weight to deviations for higher-ranked entities, where $M_i$ represents the central measure of evaluations for entity $i$; wherein if the entity $i$ is not evaluated, $w_i(M_i)$ is set to 0.

Preferably after step d) it comprises step e) removing by the computer system the clique of evaluators $j$ and their associated entities $i$ from the data matrix $S_{ij}$.

Preferably after step e) it comprises step f): recalculating by the computer system the results using robust measures of location, preferably mean, median or trimmed mean.

Preferably the data matrix $S_{ij}$ is derived from the sensor-based data collection systems or AI systems configured to analyze textual content to assign numerical ratings.

Preferably the evaluators $j$ are the sensors in an automated data collection system.

Preferably it comprises final step of constructing the graph by the computer system where the evaluators $j$ are represented as vertices, and edges between them indicate abnormal agreement.

According to another aspect of the invention, a computer program is provided comprising instructions which, when executed, cause the computer to carry out the method as described.

According to another aspect of the invention, a computer-readable medium is provided comprising instructions which, when executed, cause the computer to carry out the method as described.

## Detailed Description of the Invention

This invention presents an approach to addressing the problem of biased results caused by cliques of evaluators in decision-making systems. The method operates by analyzing the degree of agreement between pairs of evaluators, identifying groups whose scores are excessively aligned, and excluding their influence to ensure a fairer and more accurate outcome.

The core idea of the invention is that excessive agreement between evaluators-beyond what is expected from natural variations in judgment-can distort results, particularly when it occurs in small, cohesive groups or cliques. By calculating pairwise distances between evaluators' scores and detecting groups with abnormally low distances, the system can identify these cliques and take corrective action.

The method uses robust statistical techniques to measure agreement levels and introduces a system of corrective measures to ensure that identified cliques do not disproportionately influence the final decision. Additionally, it provides flexibility to handle missing data, such as cases where evaluators abstain from scoring certain entities or when reviews are incomplete.

The invention can be implemented as a software system capable of collecting evaluation data, performing the necessary calculations, and applying corrective actions. The system is highly adaptable and can be used in various contexts, such as performance-based competitions, public voting systems, and online review platforms, ensuring that the final outcomes are fair and unbiased.

By focusing on the interactions between evaluators and identifying abnormal patterns of agreement, this invention moves beyond traditional individual outlier detection and addresses a critical gap in group-based bias. It offers an advanced solution for environments where subjective assessments determine critical outcomes, providing enhanced transparency and fairness in decision-making processes.

**1. Data Collection**

A data matrix $S_{ij}$ is created, where $i$ = 1 to K are indexes of entities being evaluated (e.g., candidates in a competition, products in a review system), and $j$ = 1 to $L$ indexes the evaluators (e.g., jurors, experts, voters, or users). Each element $S_{ij}$ represents the evaluation provided by evaluator $j$ for entity $i$.

Entities $i$ or in other words evaluations typically take the form of scores or ratings. These scores can be directly assigned by evaluators or automatically generated by AI systems processing textual descriptions or reviews, such as on platforms like Amazon or Booking.com. For example, AI systems can analyze textual content to assign numerical ratings based on sentiment or other factors.

In cases where evaluators abstain from scoring certain entities (e.g., due to conflicts of interest), incomplete reviews (e.g., users not rating all products in a system) or where textual descriptions are incomplete or missing, these gaps are accounted for to ensure robust evaluation in real-world scenarios.

**2. Application of Evaluation Data Transposition (EDT) Method (Optional)**

**2.1 Description**

The Evaluation Data Transposition (EDT) method serves to equalize both the central measure (such as the mean or median) and the evaluation range (spread) of scores for each evaluator. This is particularly useful when evaluators use different scoring scales or exhibit biases in their scoring patterns. For instance, some evaluators might consistently assign higher scores, while others might be more conservative. By applying EDT, all evaluators' scores are transposed to ensure they operate within the same effective range, thereby balancing their influence on the outcome.

The EDT method overcomes the limitations of traditional approaches, which typically equalize either the central tendency (e.g., mean, median) or the range (spread) of scores, but not both simultaneously. By addressing both the central measure and the range or spread, the method ensures fairness in decision-making processes, especially in competitive environments, public voting events, educational assessments, and online review platforms. This comprehensive approach prevents any one evaluator from disproportionately influencing the result, ensuring a more balanced and fairer outcome.

While the EDT method is primarily designed for use in systems that process subjective assessments, it can also be applied in sensor data collection systems to equalize and normalize readings of miscalibrated sensors. The optional nature of this step allows for flexibility, depending on the specific evaluation system and the degree of variation in evaluators' scoring habits.

The method adjusts both the central measure (e.g., mean or median) and either the spread (the difference between the maximum and minimum values) or the entire range (the actual minimum and maximum values) of each evaluator's scores. This ensures all evaluators contribute equally to the results. There are two methods for performing the transposition:

- Linear Transposition: This method proportionally adjusts each evaluator's scores so that their central measure is equalized, and their spread is normalized. While this method ensures that all evaluators have the same spread, the specific minimum and maximum values (i.e., range) of scores may still differ. However, this is sufficient to prevent any one evaluator from disproportionately influencing the outcome based on their scoring behavior.

- Nonlinear Transposition: This method adjusts scores nonlinearly to align both the central measure and the entire range (minimum and maximum values) of each evaluator's scores. This ensures that both the central measure and the actual score range are uniform across all evaluators, providing complete uniformity in their influence on the result.

**2.2 Linear Transposition Method**

The linear transposition process consists of the following steps:

a. Calculate the Central Measure: For each evaluator $j$, calculate a central measure $M_j$, which can be the mean, median, or any other robust central measure across all entities they evaluated.

b. Set the Target Central Measure: Select the target central measure $M_{trg}$ for the transposed scores. This can be the average or median of all $M_j$, or of all scores $S_{ij}$, or another arbitrarily selected value.

c. Translate Scores to Match the Target Central Measure: Shift the scores for each evaluator $j$ to match the target central measure $M_{targ}$ using the formula:

$$\overline{S_{ij}} = S_{ij} + M_{trg} - M_j$$

This ensures that all evaluators have the same central measure.

d. Calculate the Spread: Calculate the spread $R_j$ for each evaluator, defined as the difference between the maximum and the minimum scores they assign:

$$R_j = S_{max_j} - S_{min_j}$$

e. Set the Target Spread: Determine the target spread for scores $R_{trg}$, which could be the average or median of $R_j$ across all evaluators or another arbitrary value.

f. Scale Scores to Match the Target Spread: Adjust the transposed scores $\overline{S_{ij}}$ so that their spread matches the target spread $R_{trg}$, using the formula:

$$\overline{\overline{S_{ij}}} = \left(\overline{S_{ij}} - M_j\right) \cdot \frac{R_{trg}}{R_j} + M_j$$

After applying this linear transposition, all evaluators will have the same central measure and spread, ensuring equal influence on the final result.

**2.3 Nonlinear Transposition**

The nonlinear transposition process consists of the following steps:

a. Calculate the Minimum and Maximum Values: For each evaluator $j$, calculate the minimum $S_{min_j}$ and maximum $S_{max_j}$ values of their scores.
b. Define the Target Range: Set the target range defined by the minimum and maximum values $[S_{min_{trg}}, S_{max_{trg}}]$. This can be the average or median values of $S_{min_j}$ and $S_{max_j}$ across all evaluators. or any other arbitrary values.
c. Normalize Scores Within the Range [0,1] : Normalize each evaluator's scores to fit within the range [0,1] :

$$\overline{S_{ij}} = \frac{S_{ij} - S_{min_j}}{S_{max_j} - S_{min_j}}$$

d. Calculate the Average Normalized Values: Calculate the average normalized value $AM_j$ for each evaluator and the average normalized value $AM$ across all scores.

e. Apply the Nonlinear Transformation: Adjust the scores of each evaluator using a nonlinear transformation function, such as $f(x) = x^\alpha$, where $\alpha$ is the parameter controlling the transformation. The function is applied to ensure that each evaluator's average $AM_j$ matches the target average $AM$. The equation for each evaluator is:

$$\sum_i \overline{S_{ij}}^{\alpha_j} = AM$$

This typically requires solving the nonlinear equation numerically to obtain the $\alpha_j$ parameters for each evaluator.

f. Renormalize the Scores: After applying the nonlinear transformation, renormalize the scores to the target range using the formula:

$$\overline{\overline{S_{ij}}} = S_{min_{trg}} + \left( S_{max_{trg}} - S_{min_{trg}} \right) \overline{S_{ij}}^{\alpha_j}$$

After applying this nonlinear transposition, all evaluators will have both the same central measure and the same absolute range of scores, ensuring uniformity in their impact on the final evaluations.

## 3. Pairwise Adjusted Distance Calculation

The adjusted distances between each evaluator's evaluator pairs are calculated using the novel Pairwise Adjusted Minkowski Distance or the equally novel Pairwise Adjusted Weighted Minkowski Distance formulas.

### a) Pairwise Adjusted Minkowski Distance.

For each pair of evaluators $j_1$ and $j_2$ ($j_1 \neq j_2$), pairwise distances between evaluators are calculated using the Pairwise Adjusted Minkowski Distance. This novel formula is defined as:

$$ED_{j_1 j_2} = \left( \frac{1}{K^*} \sum_{i=1}^{K} |S_{ij_1} - S_{ij_2}|^p \right)^{\frac{1}{p}}$$

where:

- $S_{ij}$ represents the score given by evaluator $j$ for entity $i$.
- $K$ is the total number of entities,
- $K^*$ is the number of entities actually evaluated by both evaluators $j_1$ and $j_2$. (In the original Minkowski distance formula, there is no division by $K^*$; this modification ensures that the method works effectively with incomplete data).
- $p \geq 0$ is the parameter that controls the distance metric and the sensitivity to deviations. Examples include:

    ◦ $p = 1$ (Manhattan distance): All deviations are treated with equal weight, resulting in the average of all absolute deviations.
    ◦ $p = 2$ (Euclidean distance): Larger deviations are emphasized more, making the method more sensitive to outliers.
    ◦ As $p$ increases, larger deviations become even more influential, and for $p = \infty$ (Chebyshev distance) only the largest deviation is considered.
    ◦ On the other hand, when $p$ decreases below 1, only the smallest deviations are important, and for $p = 0$, only the smallest distance determines the Minkowski Distance.

The flexibility of the $p$ parameter allows for fine-tuning the method's sensitivity to extreme deviations, making it particularly useful when either larger or smaller deviations need to be detected more aggressively. Using $p > 2$ can be advantageous when outliers with extreme deviations are of particular concern, and $p < 1$ can be advantageous when smaller deviations are of particular concern.

### b) Pairwise Adjusted Weighted Minkowski Distance

In this version, a weight function $w_i(M_i)$ is introduced to adjust the importance of deviations based on the consensus score $M_i$, where $M_i$ represents the central measure of evaluations for entity $i$ (e.g., mean, median, or another robust measure of location).Entities with higher scores are considered more important, and deviations in those scores are given more weight. This ensures that evaluators who deviate significantly on key or top-rated entities are more likely to be identified as cliques, while deviations on less significant entities (e.g., lower-ranked entities) are given less weight.

The formula is:

$$WED_{j_1 j_2} = \left( \frac{\sum_{i=1}^{K} \left( w_i(M_i) \cdot |S_{ij_1} - S_{ij_2}| \right)^p}{\sum_{i=1}^{K} w_i(M_i)^p} \right)^{\frac{1}{p}}$$

where:

- $w_i(M_i)$ is a function of $M_i$, assigning more weight to deviations for higher consensus scores, where $w_i(M_i)$ is set to 0 for entities $i$ which have not been evaluated by evaluator$j$.
  Example Weight Functions
- Linear Weight:

$$w_i(M_i) = M_i$$

This gives more importance to deviations for entities with higher central measures (higher $M_i$).

- Power Function:

$$w_i(M_i) = M_i^{k} \text{ with } k > 0$$

This function accentuates the weight even more for higher $M_i$, providing stronger emphasis on deviations for top-ranked entities.

- Inverse Weight (for Rankings):
  If $M_i$ represents rankings (with lower values being better), the weight function should be decreasing with $M_i$, i.e., more weight is given to deviations for entities ranked higher (lower $M_i$):

$$w_i(M_i) = \frac{1}{M_i} \text{ or } w_i(M_i) = \frac{1}{M_i^{k}} \text{ with } k > 0$$

This ensures that deviations for highly ranked entities (small $M_i$) are considered more important.

This weighting strategy allows the method to focus on critical evaluations while minimizing the risk of penalizing evaluators for larger deviations on less important entities, thereby improving both fairness and accuracy in the outlier detection process

### 4. Nonlinear Transformation

Since the distribution of pairwise distances $ED_{j_1 j_2}$ may not be symmetric, a nonlinear transformation function $f$ is applied to adjust the distances, making the distribution more even. This improves the accuracy of clique detection. Typical transformation functions include:

- $f(x) = ln(x)$ (natural logarithm), or
- $f(x) = x^{\propto}$ (power function, with $\propto > 1$),

but other nonlinear transformations may be used depending on the characteristics of the distance distribution. After transformation, the Pairwise Adjusted Distances are updated as:

$$ED_{j_1 j_2}^{*} = f\left( ED_{j_1 j_2} \right).$$

### 5. Identification of Cliques of Evaluators

Cliques are identified by comparing the transformed pairwise distances $ED^*_{j_1 j_2}$ to a robust lower threshold. Evaluator pairs whose distances fall below this threshold are considered part of a clique, as excessively small distances suggest abnormal agreement or collusion. This step focuses specifically on detecting pairs of evaluators with exceptionally similar evaluations. In a subsequent stage, these identified pairs will be analyzed further using graph-based methods to determine whether they form larger cliques consisting of three or more evaluators. The most preferable method is based on the median and MAD (Median Absolute Deviation):

$$ED^*_{j_1 j_2} < MED - R * MAD$$

where $R$ is a constant typically between 1 and 10, more preferably 1.9 and 3.3. *MAD* is defined as:

$$MAD = \mathrm{median}\left(\left|ED^*_{j_1 j_2} - MED\right|\right)$$

where *MED* is the median of the evaluator distances $ED^*_{j_1 j_2}$.

Alternative methods (e.g., using mean and standard deviation, or interquartile range) can be used, but MAD is more robust and effective in identifying outliers in the presence of extreme deviations. In all these methods, only distances lower than the threshold are considered as cliques, since larger distances indicate that the evaluators are further apart in their evaluations of entities.

### 6. Graph Construction and Clique Strength:

A graph is then constructed where evaluators are represented as vertices, and edges between them indicate abnormal agreement. While the initial detection in focused on identifying pairs of evaluators with very similar evaluations, the graph structure allows for the identification of more complex, multi-member cliques, consisting of three or more evaluators who exhibit consistently abnormal agreement across their evaluations. The strength of each clique is evaluated by measuring the degree of connectivity:

   a. Fully connected cliques have all members connected, indicating strong agreement.

   b. Partially connected cliques indicate weaker but still significant levels of agreement.

This approach enables a more comprehensive analysis of group-level biases or collusion that would not be evident by examining pairs of evaluators alone.

### 7. Corrective Actions:

After identifying a clique of evaluators, corrective actions can be taken, including:

   a. Removing all clique members and their associated evaluations from the data matrix. This eliminates the impact of evaluators who demonstrate abnormal agreement, preventing their influence from distorting the results.

   b. Aggregating clique data and replacing clique members' evaluations with single values (e.g., means, medians, or historical data). This ensures that the clique's influence is neutralized without removing their evaluations entirely.

These actions can be combined with other methods (e.g., Excluding Outlier Evaluators - EOE) to further refinement and improved fairness.

### 8. Recalculation of Results

After taking corrective actions, the original data matrix $S_{ij}$ is recalculated using robust measures of location (e.g., mean, median, or trimmed mean). This ensures that the final results reflect a more accurate and fairer consensus, free from the influence of identified cliques of evaluators.

By recalculating the final results, the method helps to remove biases caused by clique behavior, improving the fairness and accuracy of the decision-making process across various evaluation contexts.

**9. Software Implementation and Practical Integration**

**System Implementation**

The proposed method for identifying and excluding cliques of evaluators is designed to be integrated into a software system that automates the collection, processing, and analysis of evaluation data in real-time. This system is adaptable across different evaluative contexts, such as classical music competitions, sports tournaments, academic assessments, and online review platforms, where manual data entry and basic outlier evaluators detection methods are often time-consuming and prone to errors.

By automating the evaluation process, the software enables faster, more accurate, and fairer decision-making. It supports a broad range of evaluation formats, including multiple competition stages, custom weighting systems, time limits for juror evaluations, and diverse voting systems

The system includes:

- Data Input Module: Collects scores from evaluators and stores them in the data matrix.
- Distance Calculation Engine: Performs pairwise distance calculations using the Pairwise Adjusted Minkowski Distance or the Pairwise Adjusted Weighted Minkowski Distance formulas.
- Clique Detection Module: Applies statistical measures to detect cliques and identify evaluators whose agreements are abnormal.
- Corrective Action Module: Removes or neutralizes the influence of clique members and recalculates the final results.
- User Interface: Provides real-time monitoring, visualizations of cliques, and reports on the fairness of the evaluation process.

This system is highly adaptable to various applications, ensuring fairness and transparency in subjective assessments.

**a) Small-Scale Competitions: e.g. Classical Music Competitions**

*System Features:*

- Pre-registration of participants and jurors: Enables seamless tracking of relationships (e.g., juror-student conflicts), automatically preventing jurors from scoring their own students, enhancing fairness.

- Real-Time Data Entry and Processing: Jurors submit their scores during or immediately after each performance directly into the platform via a secure digital interface. This eliminates manual transcription, enabling processing in real time, and providing immediate calculation of results, drastically reducing the time needed to compute outcomes.

- Automated Cliques Detection: The system applies the clique detection method, Cliques flagged can be automatically excluded from the final results, along with their entire set of evaluations.

- Custom Time Limits for Jury Submissions: Competition organizers can set time limits for jurors to submit their evaluations. Jurors are notified of the remaining time, helping keep the competition on schedule.

- Juror Notes Collection: In addition to submitting scores, jurors can submit notes or comments about each performance. These notes are stored for later reference, assisting jurors in later stages of the competition or during post-competition feedback discussions.

- Support for Cumulative Scoring: The system supports cumulative scoring across all stages of the competition, allowing different weights to be applied to each stage according to the competition's rules. This ensures that performances from earlier stages are appropriately factored into the final score.

- Support for Special Awards: In addition to handling the main competition, the system can accommodate different voting systems for special awards, which may have unique evaluation criteria or rules compared to the main event.

- Ranking of evaluators: The system ranks evaluators based on their proximity to the consensus using the Adjusted Minkowski Distance. This feature enables real-time monitoring of juror behavior and performance, encouraging consistent and unbiased evaluations.

This software drastically reduces the time required to enter scores and process results, enabling near-instantaneous calculation of outcomes after each stage. The system's ability to handle complex competition rules and time-sensitive submissions makes it suitable for a wide range of regional, national, and international competitions.

**b) Large-Scale Public Voting: Eurovision-Style Voting**

In large public voting events, such as the Eurovision Song Contest, viewers vote for their favorite performances. Current voting systems are often simplistic, typically allowing each viewer to vote for only one candidate. These systems are vulnerable to manipulation and organized efforts to unfairly promote certain candidates.

The proposed system enhances public voting by enabling more detailed and nuanced voting methods, allowing participants to rate or rank multiple candidates, providing a more accurate assessment of each performer's merit. It is specifically designed to support large-scale public participation while detecting and preventing manipulative voting patterns through clique detection method. The system is capable of handling events where thousands or even millions of votes are cast within a short window of time.

*System Features:*

- Detailed Public Voting: Participants can rank multiple candidates or assign scores to each one, offering a more nuanced voting approach and ensuring fairer, more representative results.

- Real-Time Clique Detection: The software applies the proposed clique detection method to identify and exclude coordinated voting groups that attempt to manipulate results.

- Scalability for Short Voting Windows: Large-scale public votes, such as those in Eurovision-style contests, often occur within a limited timeframe, requiring substantial computational resources. The system is built to scale efficiently using cloud infrastructure, ensuring that millions of votes can be processed quickly and fairly within the given time constraints.

- Multiple Voting Systems: The system can support different voting systems within the same event. For example, juror panels can evaluate candidates separately from expert or journalist panels and the public vote, each group using distinct evaluation rules. Additionally, special awards may have their own set of evaluation criteria. This flexibility allows for multiple voting systems to operate within a single event, processing juror, expert, and public votes independently, with different rules applied as needed.

This system offers greater flexibility in public voting and ensures fairness by identifying and excluding manipulative voting patterns. Its ability to handle large-scale voting in real-time makes it ideal for national and international contests, such as Eurovision, where rapid and accurate results are crucial.

**c) Continuous Review Systems: Online Review Platforms**

Platforms like Amazon, Booking.com, and IMDb rely on user-generated reviews to determine product, service, or entertainment ratings. However, these platforms are vulnerable to manipulation by coordinated groups of users who attempt to skew ratings in favor of or against specific items.

The proposed system integrates seamlessly with existing databases to provide real-time recalculations of ratings as new reviews are submitted. It uses clique detection methods to identify and exclude biased or manipulative groups of reviewers, ensuring that ratings accurately reflect genuine user preferences.

*System Features:*

- Continuous Review Processing: The system recalculates aggregate ratings in real time as new reviews are submitted.

It continuously monitors cliques, ensuring that product and service ratings reflect the broader user base's genuine preferences.

- Clique Detection: Using the proposed clique detection method, the system identifies and excludes reviewers or manipulative groups who demonstrate abnormal agreement, preventing their influence from distorting the results.

- Juror and Reviewer Ranking: In addition to detecting cliques, the system ranks reviewers based on their consistency with the consensus. Reviewers with lower Adjusted (Weighted) Minkowski Distances are ranked higher, as they are considered more reliable. Reviewers who frequently deviate from the consensus or are identified as outliers are flagged and ranked lower.

The system enhances the reliability of online review platforms by detecting and excluding cliques of reviewers. By recalculating aggregate scores in real time and ranking reviewers based on reliability, the platform becomes more transparent and trustworthy for users.

**Potential applications**

- Performance-based competitions (e.g., music, sports):
Ensuring fairness in competitive environments such as music or sports by identifying cliques of jurors who may collude or exhibit abnormal agreement, distorting the evaluation outcomes. This ensures that the final results are not disproportionately influenced by a group of evaluators acting in concert to benefit or penalize specific participants.

- Voting systems (political and non-political):
Detecting cliques of voters whose voting patterns abnormally align, potentially indicating manipulation or collusion. This ensures that the final vote count is not biased by coordinated efforts from specific groups of voters to skew the outcome in both political and non-political voting contexts.

- Educational and professional assessments:
Preventing cliques of evaluators from disproportionately influencing the results in academic, professional, or institutional assessments. By identifying groups of evaluators whose scores exhibit abnormal agreement, this method ensures that the final assessments are fair and accurately reflect individual performance.

- Online review systems (e.g., Amazon, Booking.com):
Detecting cliques of reviewers who manipulate product or service ratings on e-commerce platforms (e.g., Amazon) or review platforms (e.g., Booking.com). By identifying coordinated groups of users who act in concert to artificially inflate or deflate ratings, the method ensures that the aggregated scores reflect genuine user preferences and are not skewed by manipulation.

- Entertainment rating platforms (e.g., IMDb, Rotten Tomatoes):
Identifying cliques of reviewers in entertainment platforms who exhibit abnormally aligned ratings for films, TV shows, or other media. This ensures the integrity of the aggregated ratings, preventing small groups of users from disproportionately influencing public perception.

**Conclusion**

This invention provides a robust method for improving the accuracy of decision-making processes by identifying and addressing cliques of evaluators. By allowing for multiple detection methods and corrective actions, the method ensures that abnormal patterns of agreement or collusion among evaluators are detected and corrected. This enhances the fairness and reliability of final results across various application contexts, including performance-based competitions, voting systems, educational assessments, and online review platforms. The method's flexibility in detecting cliques using robust statistical measures, combined with its ability to handle incomplete data, ensures that even subtle manipulations or unintentional biases do not distort the outcomes. As a result, decision-making processes are made more accurate, transparent, and resistant to group-based biases.

**Claims**

1.  A method for detecting the cliques of evaluators in a decision-making process, comprising steps:

    a. collecting a data matrix $S_{ij}$ to a computer system using an automatic input interface, wherein the elements of the matrix $S_{ij}$ are the real numbers in a predefined range, wherein each of the elements of the matrix $S_{ij}$ represent a numerical evaluation provided by an evaluator $j$ for an evaluated entity $i$,
    b. for each pair of the evaluators $j$, where $j_1$ and $j_2$ ($j_1 \neq j_2$) from the data matrix $S_{ij}$, calculating by the computer system the Pairwise Adjusted Distances $ED_{j_1j_2}$,
    c. applying by the computer system a nonlinear transformation to the Pairwise Adjusted Distances $ED_{j_1j_2}$ so that:

$$ED^*_{j_1 j_2} = f\left(ED_{j_1 j_2}\right)$$

    preferably by a natural logarithm function $f(x) = ln(x)$, or a power function $f(x) = x^\propto$ where $\propto > 1$,
    d. identifying the cliques of the evaluators $j$ by comparing by the computer system the transformed distances $ED^*_{j_1 j_2}$ to a robust lower threshold, preferably as defined by formula:

$$ED^*_{j_1 j_2} < MED - R * MAD$$

    where:

      R is a constant, preferably in range 1 to 10, more preferably in range 1.9 to 3.3,
      $MED$ is the median of the evaluator distances $ED^*_{j_1 j_2}$,
      $MAD$ is defined as:

$$MAD = \mathrm{median}\left(\left|ED^*_{j_1 j_2} - MED\right|\right)$$

2.  The method according to claim 1, wherein after step a) there is performed operation of Linear Data Transposition comprising following steps:

    a1) setting by the computer system a Target Central Measure $M_{trg}$, preferably a median or an average of the data matrix $S_{ij}$,
    a2) calculating by the computer system the transposed scores $\overline{S_{ij}}$ by shifting the entities $i$ for each of the evaluator $j$ to match the target central measure $M_{trg}$ using the formula:

$$\overline{S_{ij}} = S_{ij} + M_{trg} - M_j$$

    where $M_j$ is a central measure for each evaluator $j$, which can be the mean, median, or any other robust central measure across all entities they evaluated,
    a3) calculating by the computer system a spread $R_j$ for each of the evaluators $j$, defined as:

$$R_j = S_{max_j} - S_{min_j}$$

    a4) determining by the computer system a target spread for scores $R_{trg}$, preferably an average or a median across all the evaluators $j$,
    a5) adjusting by the computer system the transposed scores $\overline{S_{ij}}$ so that their spread matches the target spread $R_{trg}$ using the formula:

$$\overline{\overline{S_{ij}}} = \left(\overline{S_{ij}} - M_j\right) \cdot \frac{R_{trg}}{R_j} + M_j$$

wherein the data matrix $\overline{S_{iJ}}$ replaces the data matrix $S_{ij}$ for calculations of further steps.

3. The method according to claim 1, wherein after step a) there is performed operation of Nonlinear Data Transposition comprising following steps:

   a1) calculating by the computer system for each of the evaluator $j$ the minimum $S_{min_j}$ and maximum $S_{max_j}$ values of their entities $i$,
   a2) setting by the computer system the Target Range $[S_{min_{trg}}, S_{max_{trg}}]$ preferably a median or an average of the minimum $S_{min_j}$ and maximum $S_{max_j}$,
   a3) normalizing by the computer system each of the evaluators $j$ entity $i$ to fit within the range [0, 1] using the formula:

$$\overline{S_{iJ}} = \frac{S_{ij} - S_{min_j}}{S_{max_j} - S_{min_j}}$$

   a3) calculating by the computer system the Average Normalized Values $AM_j$ for each of the evaluator $j$ and the average normalized value $AM$ across all the entities $i$,
   a4) adjusting by the computer system the entities $i$ of each of the evaluator $j$ using a nonlinear transformation function such that $f(x) = x^\alpha$, where $\alpha$ is a parameter controlling the transformation, wherein the equation for each evaluator $j$ is:

$$\sum_i \overline{S_{iJ}}^{\propto j} = AM$$

   a4) renormalize by the computer system the entities $i$, using the formula:

$$\overline{\overline{S_{iJ}}} = S_{min_{trg}} + \left(S_{max_{trg}} - S_{min_{trg}}\right) \overline{S_{iJ}}^{\propto j}$$

   wherein the data matrix $\overline{S_{iJ}}$ replaces the data matrix $S_{ij}$ for calculations of further steps.

4. The method according to claim 1, 2 or 3, wherein the Pairwise Adjusted Distances $ED_{j_1j_2}$ are calculated using a Pairwise Adjusted Minkowski Distance formula:

$$ED_{j_1 j_2} = \left(\frac{1}{K^*} \sum_{i=1}^{K} \left|S_{ij_1} - S_{ij_2}\right|^p\right)^{\frac{1}{p}}$$

   where:

   • $S_{ij}$ is the score given by evaluator $j$ for entity $i$,
   • $K$ is the total number of the entities $i$, and
   • $K^*$ is a number of the entities $i$ evaluated by the evaluator $j$,
   • $p \geq 0$ is a parameter suitable for flexible weighting of deviations, with larger deviations penalized more heavily as $p$ increases.

5. The method according to claim 1, or 2 wherein the Adjusted Distances are calculated using Adjusted Weighted Minkowski Distance formula:

$$WED_{j_1 j_2} = \left( \frac{\sum_{i=1}^{K} \left( w_i(M_i) \cdot |S_{ij_1} - S_{ij_2}| \right)^p}{\sum_{i=1}^{K} w_i(M_i)^p} \right)^{\frac{1}{p}}$$

where:

- $S_{ij}$ is the score given by the evaluator $j$ for the entity $i$,
- $K$ is the total number of the entities $i$,
- $p \geq 0$ is a parameter allowing flexible weighting of deviations, with the larger deviations penalized more heavily as $p$ increases,
- $w_i(M_i)$ is a weight function applied to the deviations based on the importance of the consensus score $M_i$ for each entity $i$, giving more weight to deviations for higher-ranked entities, where $M_i$ represents the central measure of evaluations for entity $i$; wherein if the entity $i$ is not evaluated, $w_i(M_i)$ is set to 0.

6. The method according to claim 1, 2, 3, 4 or 5, wherein after step d) it comprises step e) removing by the computer system the clique of evaluators j and their associated entities $i$ from the data matrix $S_{ij}$.

7. The method according to any of the proceeding claims, wherein after step e) it comprises step f): recalculating by the computer system the results using robust measures of location, preferably mean, median or trimmed mean.

8. The method according to any of the proceeding claims, wherein the data matrix $S_{ij}$ is derived from the sensor-based data collection systems or AI systems configured to analyze textual content to assign numerical ratings.

9. The method according to claim 8, wherein the evaluators $j$ are the sensors in an automated data collection system.

10. The method according to any of the proceeding claims, wherein it comprises final step of constructing the graph by the computer system where the evaluators $j$ are represented as vertices, and edges between them indicate abnormal agreement.

11. A computer program comprising instructions which, when executed, cause the computer to carry out the method according to any one of claims 1 to 10.

12. A computer-readable medium comprising instructions which, when executed, cause the computer to carry out the method according to any one of claims 1 to 10.

**Amended claims in accordance with Rule 137(2) EPC.**

1. A computer implemented method for detecting the cliques of evaluators in a decision-making process, comprising steps:

   a. collecting a data matrix $S_{ij}$ to a computer system using an automatic input interface, wherein the elements of the matrix $S_{ij}$ are the real numbers in a predefined range, wherein each of the elements of the matrix $S_{ij}$ represent a numerical evaluation provided by an evaluator $j$ for an evaluated entity i,
   b. for each pair of the evaluators $j$, where $j$, and $j_2$ ($j_1 \neq j_2$) from the data matrix $S_{ij}$, calculating by the computer system the Pairwise Adjusted Distances $ED_{j_1 j_2}$,
   c. applying by the computer system a nonlinear transformation to the Pairwise Adjusted Distances $ED_{j_1 j_2}$ so that:

$$ED^*_{j_1 j_2} = f\left( ED_{j_1 j_2} \right)$$

   preferably by a natural logarithm function f($x$) = $\ln(x)$, or a power function f($x$) = $x^{\propto}$ where $\propto > 1$,
   d. identifying the cliques of the evaluators j by comparing by the computer system the transformed distances $ED^*_{j_1 j_2}$ to a robust lower threshold, preferably as defined by formula:

$$ED^*_{j_1 j_2} < MED - R * MAD$$

where:

R is a constant, preferably in range 1 to 10, more preferably in range 1.9 to 3.3,

$MED$ is the median of the evaluator distances $ED^*_{j_1 j_2}$ ,

$MAD$ is defined as:

$$MAD = \text{median}\left(\left|ED^*_{j_1 j_2} - MED\right|\right)$$

2. The computer implemented method according to claim 1, wherein after step a) there is performed operation of Linear Data Transposition comprising following steps:

a1) setting by the computer system a Target Central Measure $M_{trg}$, preferably a median or an average of the data matrix $S_{ij}$,

a2) calculating by the computer system the transposed scores $\overline{\overline{S_j}}$ by shifting the entities i for each of the evaluator $j$ to match the target central measure $M_{,,.}$, using the formula:

$$\overline{S_{ij}} = S_{ij} + M_{trg} - M_j$$

where $M_j$ is a central measure for each evaluator $j$, which can be the mean, median, or any other robust central measure across all entities they evaluated,

a3) calculating by the computer system a spread $R_j$ for each of the evaluators j, defined as:

$$R_j = S_{max_j} - S_{min_j}$$

a4) determining by the computer system a target spread for scores $R_{trg}$, preferably an average or a median across all the evaluators $j$,

a5) adjusting by the computer system the transposed scores $\overline{S_j}$ so that their spread matches the target spread $R_{trg}$, using the formula:

$$\overline{\overline{S_{ij}}} = \left(\overline{S_{ij}} - M_j\right) \cdot \frac{R_{trg}}{R_j} + M_j$$

wherein the data matrix $\overline{\overline{S_{ij}}}$ replaces the data matrix $S_{ij}$ for calculations of further steps.

3. The computer implemented method according to claim 1, wherein after step a) there is performed operation of Nonlinear Data Transposition comprising following steps:

a1) calculating by the computer system for each of the evaluator j the minimum $S_{min_j}$; and maximum $S_{max_j}$ values of their entities i,

a2) setting by the computer system the Target Range $[S_{min_{trg}}, S_{max_{trg}}]$ preferably a median or an average of the minimum $S_{min_j}$ and maximum $S_{max_j}$,

a3) normalizing by the computer system each of the evaluators j entity i to fit within the range [0, 1] using the formula:

$$\overline{S_{ij}} = \frac{S_{ij} - S_{min_j}}{S_{max_j} - S_{min_j}}$$

a3) calculating by the computer system the Average Normalized Values $AM_j$ for each of the evaluator $j$ and the average normalized value *AM* across all the entities i,

a4) adjusting by the computer system the entities i of each of the evaluator j using a nonlinear transformation function such that f($x$) = $x^\alpha$, where $\alpha$ is a parameter controlling the transformation, wherein the equation for each evaluator j is:

$$\sum_i \overline{S_{iJ}}^{-\alpha_j} = AM$$

a4) renormalize by the computer system the entities i, using the formula:

$$\overline{\overline{S_{iJ}}} = S_{min_{trg}} + \left(S_{max_{trg}} - S_{min_{trg}}\right)\overline{S_{iJ}}^{-\alpha_j}$$

wherein the data matrix $\overline{\overline{S_{iJ}}}$ replaces the data matrix $S_{ij}$ for calculations of further steps.

**4.** The computer implemented method according to claim 1, 2 or 3, wherein the Pairwise Adjusted Distances $ED_{j_1 j_2}$ are calculated using a Pairwise Adjusted Minkowski Distance formula:

$$ED_{j_1 j_2} = \left(\frac{1}{K^*}\sum_{i=1}^{K}\left|S_{ij_1} - S_{ij_2}\right|^p\right)^{\frac{1}{p}}$$

where:

- $S_{ij}$ is the score given by evaluator j for entity *i*,
- $K$ is the total number of the entities i, and
- K* is a number of the entities i evaluated by the evaluator j,
- $p \geq 0$ is a parameter suitable for flexible weighting of deviations, with larger deviations penalized more heavily as p increases.

**5.** The computer implemented method according to claim 1, or 2 wherein the Adjusted Distances are calculated using Adjusted Weighted Minkowski Distance formula:

$$WED_{j_1 j_2} = \left(\frac{\sum_{i=1}^{K}\left(w_i(M_i)\cdot\left|S_{ij_1} - S_{ij_2}\right|\right)^p}{\sum_{i=1}^{K} w_i(M_i)^p}\right)^{\frac{1}{p}}$$

where:

- $S_{ij}$ is the score given by the evaluator j for the entity i,
- $K$ is the total number of the entities i,
- $p \geq 0$ is a parameter allowing flexible weighting of deviations, with the larger deviations penalized more heavily as p increases,
- $w_i(M_i)$ is a weight function applied to the deviations based on the importance of the consensus score $M_i$ for each entity i, giving more weight to deviations for higher-ranked entities, where $M_i$ represents the central measure of evaluations for entity *i*; wherein if the entity i is not evaluated, $w_i(M_i)$ is set to 0.

**6.** The computer implemented method according to claim 1, 2, 3, 4 or 5, wherein after step d) it comprises step e) removing by the computer system the clique of evaluators j and their associated entities i from the data matrix $S_{ij}$.

7. The computer implemented method according to any of the proceeding claims, wherein after step e) it comprises step f): recalculating by the computer system the results using robust measures of location, preferably mean, median or trimmed mean.

8. The computer implemented method according to any of the proceeding claims, wherein the data matrix $S_{ij}$ is derived from the sensor-based data collection systems or AI systems configured to analyze textual content to assign numerical ratings.

9. The computer implemented method according to claim 8, wherein the evaluators j are the sensors in an automated data collection system.

10. The computer implemented method according to any of the proceeding claims, wherein it comprises final step of constructing the graph by the computer system where the evaluators j are represented as vertices, and edges between them indicate abnormal agreement.

11. A computer program comprising instructions which, when executed, cause the computer to carry out the method according to any one of claims 1 to 10.

12. A computer-readable medium comprising instructions which, when executed, cause the computer to carry out the method according to any one of claims 1 to 10.

Europäisches
Patentamt

European
Patent Office

Office européen
des brevets

# EUROPEAN SEARCH REPORT

**Application Number**

EP 24 21 4370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG ZHUO ET AL: "Graph-based review spammer group detection", KNOWLEDGE AND INFORMATION SYSTEMS, SPRINGER VERLAG,LONDON, GB, vol. 55, no. 3, 19 July 2017 (2017-07-19), pages 571-597, XP036474985, ISSN: 0219-1377, DOI: 10.1007/S10115-017-1068-7 [retrieved on 2017-07-19] * abstract * * section 1 Introduction * * section 3 The GGSPAM computing framework * * section 4 Bi-connected spammer group detection * * section 5.1 The datasets * ----- | 1-12 | INV. G06Q30/0201 G06Q30/0204 G06Q30/0282 |
| A | KONTEK KRZYSZTOF ET AL: "Identifying outlier scores and outlier jurors to reduce manipulation in classical music competitions", JOURNAL OF CULTURAL ECONOMICS, 28 November 2023 (2023-11-28), XP093241534, Boston ISSN: 0885-2545, DOI: 10.1007/s10824-023-09494-7 Retrieved from the Internet: URL:https://link.springer.com/article/10.1007/s10824-023-09494-7/fulltext.html> * the whole document * ----- -/-- | 1-12 | **TECHNICAL FIELDS SEARCHED (IPC)** G06Q |

The present search report has been drawn up for all claims

| Place of search | Date of completion of the search | Examiner |
|---|---|---|
| The Hague | 20 March 2025 | Cirstet, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

page 1 of 2

EUROPEAN SEARCH REPORT

**Application Number**

EP 24 21 4370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SAEEDREZA SHEHNEPOOR ET AL: "HIN-RNN: A Graph Representation Learning Neural Network for Fraudster Group Detection With No Handcrafted Features", ARXIV.ORG, CORNELL UNIVERSITY LIBRARY, 201 OLIN LIBRARY CORNELL UNIVERSITY ITHACA, NY 14853, 25 May 2021 (2021-05-25), XP081968684, * the whole document * | 1-12 | |
| A | ALLAHBAKHSH MOHAMMAD ET AL: "Representation and querying of unfair evaluations in social rating systems", COMPUTERS & SECURITY, ELSEVIER SCIENCE PUBLISHERS. AMSTERDAM, NL, vol. 41, 26 October 2013 (2013-10-26), pages 68-88, XP028606294, ISSN: 0167-4048, DOI: 10.1016/J.COSE.2013.09.008 * the whole document * | 1-12 | |

TECHNICAL FIELDS SEARCHED (IPC)

The present search report has been drawn up for all claims

| Place of search | Date of completion of the search | Examiner |
|---|---|---|
| The Hague | 20 March 2025 | Cîrstet, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2